(19) Europäisches Patentamt
European Patent Office
Office européen des brevets

(11) Publication number : **0 534 774 A1**

# (12) EUROPEAN PATENT APPLICATION

(21) Application number : **92308745.6**

(51) Int. Cl.$^5$ : **B01D 53/14**

(22) Date of filing : **25.09.92**

(30) Priority : **25.09.91 US 766491**

(43) Date of publication of application : **31.03.93 Bulletin 93/13**

(84) Designated Contracting States : **AT BE CH DE DK ES FR GB GR IT LI MC NL PT SE**

(71) Applicant : **EXXON CHEMICAL PATENTS INC.**
**200 Park Avenue**
**Florham Park New Jersey 07932 (US)**

(72) Inventor : **Mannarino, Francesco**
**9415 151 Avenue**
**Edmonton, Alberta, T5E 2R1 (CA)**
Inventor : **Wohlgeschaffen, Kenneth**
**10149 Saskatchewan Drive, Apt. 1010**
**Edmonton, Alberta, T6E 6B6 (CA)**

(74) Representative : **Northover, Robert Frank et al**
**Exxon Chemical Limited Exxon Chemical**
**Technology Centre PO Box 1**
**Abingdon Oxfordshire, OX13 6BB (GB)**

## (54) 5,5-Dialkyl hydantoins for promoted acid gas scrubbing processes.

(57) 5,5-dialkyl hydantoins may be utilized directly as starting material promoters in hot basic aqueous scrubbing systems. Operating parameters encountered in continuous hot basic aqueous scrubbing system will cause such hydantoins to undergo relatively rapid hydrolysis, yielding the corresponding amino acids which in turn act as promoters for alkali or alkaline earth metal salts used in such scrubbing systems.

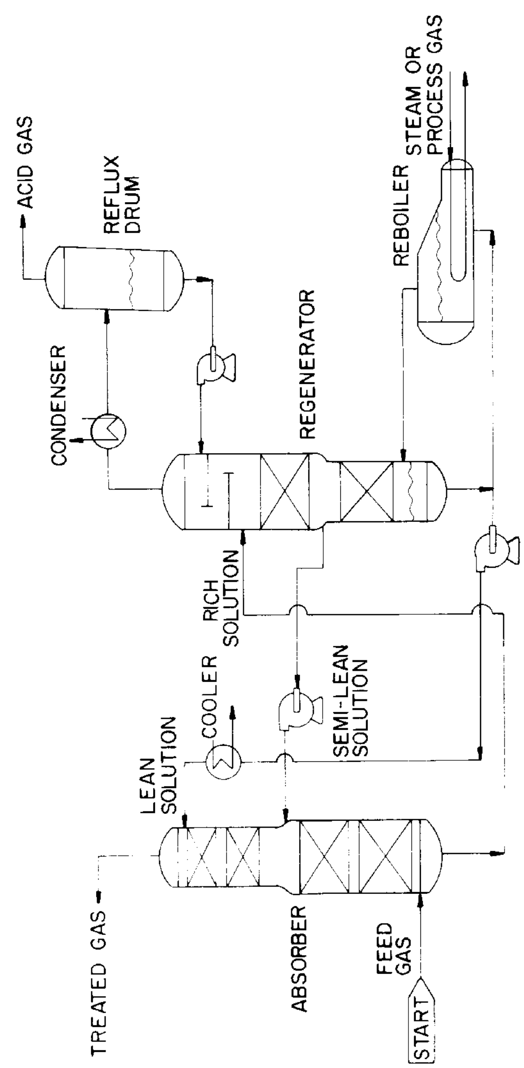


FIG. I

EP 0 534 774 A1

## BACKGROUND OF THE INVENTION

## FIELD OF THE INVENTION

This invention relates to the use of 5,5-dialkyl hydantoins as promoter precursors in hot alkali $CO_2$ gas scrubbing systems.

## DESCRIPTION OF RELATED ART

Acid gas scrubbing processes are of considerable industrial importance. Most of these processes involve contacting a gas stream with an aqueous solution containing a basic material and absorbing the acid gas, principally carbon dioxide and hydrogen sulfide, into the solution and desorbing the absorbed gas in a separate stage wherein the solution is regenerated. The regenerated solution is then recycled to the absorption stage.

Basic materials which are used in such processes include alkali or alkaline earth metal salts such as hydroxides and carbonates. In a typical process wherein potassium carbonate solution is used to absorb $CO_2$ from the process gas (the so called "hot pot" process), the chemical reaction may be expressed as follows:

$$K_2CO_3 + H_2O + CO_2 \leftrightarrow 2KHCO_3 + \text{Heat}$$

It is known that primary and secondary amines act as promoters of $CO_2$ absorption. In the promotion chemistry, the amine reacts initially with $CO_2$ at the gas/liquid interface to form carbamate and ammonium ions. The ammonium ions are then converted back to free amine in the bulk solution by aasociation with $CO_3^{=}$, liberating $HCO_3^-$ ions. Similarly, the carbamate ions are hydrolyzed in solution back to free amine, also liberating $HCO_3^-$ ions. The overall reaction if it goes to completion is as follows:

$$CO_2 + CO_3^{=} + H_2O \leftrightarrow 2HCO_3^-$$

Examples of promoters which have been used in the absorption process include alkanolamines, particularly diethanolamine (DEA), sterically hindered polyamines such as N-cyclohexyl 1,3-propane-diamine and sterically hindered amino acids such as N-secondary butyl glycine.

A particularly preferred class of hindered amines for use as promoters in such gas absorption processes are primary amino acids such as 2-amino isobutyric acid, as disclosed in U.S. Patents 4,759,866 and 4,919,904. These materials are preferred because they tend to form less stable carbamate ions. This instability facilitates hydrolysis of the carbamate ion back to free amine thereby providing more free amine to react with $CO_2$. More stable carbamates do not readily hydrolyze under operating conditions, resulting in loss of amine in the system over a period of time.

There are a number of synthesis routes for preparing primary amino acids. For Example, U.S. Patent 3,636,098 discloses the preparation of alpha amino acids by reacting a selected aldehyde or ketone, ammonia, carbon dioxide and hydrocyanic acid in aqueous medium to form the corresponding hydantoin compound, followed by hydrolysis of the hydantoin to form the amine. U.S. Patent 3,536,726 discloses a one step process for producing primary amino acids by reacting an aldehyde or ketone cyanohydrin in an aqueous solution of ammonia and carbon dioxide at a temperature above 100°C and under pressure, and recovering the amino acid from solution. In addition, U.S. Patent 2,557,920 discloses the preparation of alpha-amino monocarboxylic acids by the hydrolysis of the hydantoin compound in the presence of an aqueous solution of an alkali metal hydroxide or carbonate at a temperature above 130°C and under pressure.

Yet another method for preparing 2-aminoisobutyric acid comprises oxidizing 2-amino-2-methyl-1-propanol by heating it with an alkali metal hydroxyde employing a catalyst such as cadmium oxide.

These and other processes for preparing amino acids tend to be complex, energy intensive and corrosive to equipment. Consequently the cost of amino acids so produced tends to be high. Thus the advantages of the use of such acids in gas scrubbing processes in terms of efficiency and process economics tends to be offset to some degree by their relatively high cost.

Applicants have now discovered that 5,5-dialkyl hydantoins may be utilized directly as starting material promoters in hot basic aqueous scrubbing systems. This development is based on the discovery that operating parameters encountered in continuous hot basic aqueous scrubbing systems will cause such hydantoins to undergo relatively rapid hydrolysis, yielding the corresponding amino acids which in turn act as promoters for alkali or alkaline earth metal salts used in such scrubbing systems.

Accordingly in one aspect the invention provides a process for removing $CO_2$ and other acid gases from a normally gaseous mixture comprising:

(i) contacting the normally gaseous mixture with an aqueous scrubbing solution comprising a mixture of:

(a) one or a mixture of alkali or alkaline earth metal salts;

(b) a hydantoin compound having the formula

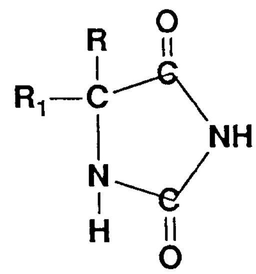

wherein R and $R_1$ may be the same or different and are selected from the group consisting of $C_1$ to $C_3$ alkyl radicals;

(c) water;

(ii) subjecting said scrubbing solution to hydrolysis-absorption conditions to form a reaction mixture comprising the corresponding acid of said hydantoin compound; and

(iii) desorbing at least a portion of the absorbed $CO_2$ from said reaction mixture.

In another aspect the invention provides a process for replenishing an aqueous alkali scrubbing solution containing a gas adsorption promoter comprising adding to said solution a hydantoin compound having the formula as set out hereinbefore, and subjecting the mixture to hydrolysis conditions to convert the hydantoin to a 2-amino-alkanoic acid or salt thereof.

Figure 1 is a schematic diagram illustrating a typical continuous gas scrubbing process to which the invention is applied.

Under pressure and temperature conditions encountered in a continuous gas scrubbing process, and in the presence of an aqueous alkali solution, the hydantoins used in the present invention rapidly convert in-situ to primary amino acids having the formula 2:

2. 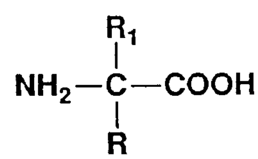

wherein R and $R_1$ are as set forth above.

The most preferred hydantoin starting materials include 5,5-dimethylhydantoin which converts under aqueous alkali scrubbing conditions to 2-aminoisobutyric acid; 5-ethyl-5-methylhyantoin which converts to 2-amino-2-methylbutanoic acid; 5-methyl-5-propylhydantoin which converts to 2-amino-2-methylpentanoic acid; 5,5-diethyl-hydantoin which converts to 2-amino-2-ethylbutanoic acid; 5-ethyl-5-propylhydantoin which converts to 2-amino-2-ethylpentanoic acid; 5,5-dipropyl-hydantoin which converts to 2-amino-2-propyl-pentanoic acid; 5-isopropyl-5-methylhydantoin which converts to 2-amino-2,3-dimethylbutanoic acid; 5-ethyl-5-isopropylhydantoin which converts to 2-amino-2-ethyl-3-methylbutanoic acid; 5-isopropyl-5-propyl hydantoin which converts to 2-amino-2-isopropyl pentanoic acid; and 5,5-diisopropylhydantoin which converts to 2-amino-2-isopropyl-3-methylbutanoic acid.

Various aqueous scrubbing solutions which are useful in the hydrolysis - absorption process of this invention are generally disclosed in U.S. Patent 3,793,434.

In general, the aqueous solutions comprise an alkali or alkaline earth metal salt or hydroxide. Preferred alkali materials are alkali metal salts or hydroxides such as sodium or potassium carbonates, bicarbonates, hydroxides, phosphates and mixtures thereof. Such solutions may also contain minor amounts of an alkali metal borate or phosphate. The most preferred scrubbing solution comprises an aqueous solution of one or more of the potassium salts, especially potassium carbonate, alone or in mixture with potassium bicarbonate or potassium hydroxide.

The alkali material is typically present in the scrubbing solution at a weight percent of from 20 to 40, more preferably from 20 to 35 weight percent. The concentration of the alkali material should be selected so that it remains in solution throughout the entire cycle of hydrolysis, absorption of $CO_2$ from the gas stream and desorption of $CO_2$ in the regeneration step.

The hydantoin compounds of the present invention are typically directly dissolved in the aqueous alkali solution at levels sufficient such that appropriate amounts of the amino acid are generated during the subsequent absorption-desorption process conditions. The hydantoins are preferably incorporated into the alkali solution at levels of from at least 10 ppm to 25 weight percent, more preferably from 20 ppm to 15 weight percent, and most preferably from 20 weight percent.

The aqueous alkali solution may also contain a corrosion inhibitor which serves to retard the oxidative and corrosive effect of the scrubbing reagents and acid gases in the scrubbing system. Examples of such inhibitors include vanadium salts and oxides such as disclosed in U.S. Patent 4,759,866, including ammonium or alkali metal vanadates such as ammonium meta vanadate and $V_2O_5$. These vanadium compounds contain vanadium at an oxidation state of +5 or undergo oxidation to result in vanadium at an oxidation state of +5. Other corrosion inhibitors include antimony compounds, mixtures of the aforementioned +5 vanadium compounds or mixtures of soluble salts of antimony and molybdenum, all of which are described or referred to in U.S. patent 4,590,036. Potassium or sodium nitrite may also be employed as corrosion inhibitors, particularly in combination with the vanadium compounds.

These inhibitors are preferably mixed with the aqueous solution and the hydantoin compound prior to introduction into the scrubbing system. They are generally added at levels within the range of from 0.01 to 5% by weight.

The aqueous alkali solution may also advantageously contain an anti-foaming agent which reduces or eliminates the foam created during the gas scrubbing process. Preferred anti foaming agents include polyoxyethylene-polyoxypropylene block copolymers such as disclosed in U.S. patent 4,208,385. When used, the anti foaming agent is employed at levels from 1 to 1500 parts per million based on the weight of the solution.

In the preferred method for practicing the invention as schematically illustrated in Figure 1, the contact of the absorbent mixture (initially the basic solution containing the hydantoin compound and subsequently the solution containing its hydrolysis product) and the acid gas takes place in an absorber tower.

The term, acid gas, includes $CO_2$ alone or in combination with one or more of $H_2S$, $SO_2$, $CS_2$,HCN, COS, $H_2$,$NH_3$,CO, $N_2$, Ar, He and the oxides and sulfur derivatives of $C_1$ to $C_4$ hydrocarbons. These acid gases may be present in trace amounts within a gaseous mixture or in major proportions.

The gaseous mixture from which the acid gases are to be removed may be brought into intimate contact with the absorbing solution using conventional means, such as a tower packed, with for example, metallic or ceramic rings or with bubble cap plates or sieve plates, or a bubble reactor.

In a preferred mode of practicing the invention, the absorption step is conducted by feeding the gaseous mixture into the base of the tower while fresh absorbing solution is fed into the top. The gaseous mixture freed largely from acid gases emerges from the top. Preferably, the temperature of the absorbing solution during the absorption step in the range from 25° to 200°C, more preferably from 50° to 150°C. Pressures in the absorber may vary widely; acceptable pressures are between 34.5 and 13790 kPa (5 and 2000 psia), preferably 689 to 10342 kPa (100 to 1500 psia), and most preferably 1378 to 6895 kPa (200 to 1000 psia). In the desorber, the pressures may range from 34.5 to 689 kPa (5 to 100 psia). The partial pressure of the acid gas, e.g., $CO_2$, in the feed mixture will preferably be in the range from 0.69 to 5516 kPa (0.1 to 800 psia) and more preferably in the range from 6.9 to 2758 kPa (1 to 400 psia). Absorption takes place under conditions such that the acid gas, e.g., $CO_2$, is absorbed by the absorption solution. Generally, countercurrent contacting to remove the acid gas will last for a period from 0.1 to 60 minutes, preferably 1 to 10 minutes. During absorption, the solution is maintained in a single phase.

The aqueous absorption solution comprising the alkali material, the activator system comprising the primary sterically hindered amino acid salt, which is saturated or partially saturated with gases, such as $CO_2$, may be regenerated so that it can be recycled back to the absorber. Preferably, the regeneration should take place in a single liquid phase. Therefore, the presence of the highly water soluble amino acid salt provides an advantage in this part of the overall acid gas scrubbing process. The regeneration, or desorption, may be accomplished in one or more vapor/liquid contacting stages and is performed by conventional means, such as pressure reduction, which causes the acid gases to flash off and by-passing the solution into a tower of similar construction to that used in the absorption step, at or near the top of the tower, and passing an inert gas, such as air, nitrogen, or preferably steam up the tower. The temperature of the solution during the regeneration step may be the same as in the absorption step, i.e., 25° to 200°C, and preferably 50° to 150°C. The absorbing solution, after being cleansed of at least a portion of the acid moieties, may be recycled back to the absorbing tower. Makeup absorbent may be added as needed.

As a typical example, during desorption, the acid gas, e.g., $CO_2$ rich solution from the high pressure absorber, is first sent to a flash chamber where steam and some $CO_2$ are flashed from the solution at low pressure. The amount of $CO_2$ flashed off will, in general, be 20 to 60% of the net $CO_2$ recovered in the flash and stripper. This is increased somewhat, e.g., to 50 to 80%, with the high desorption rate promoter system of this invention owing to the enhanced $CO_2$ loading of the rich solution. Solution from the flash chamber is then steam stripped in the packed or plate tower, stripping steam having been generated in the reboiler in base of the stripper. Pressure in the flash chamber and stripper is usually about 110 to 689 kPa (16 to 100 psia) preferably 110 to 207

kPa (16 to 30 psia), and the temperature is in the range from 25° to 200°C, preferably 35° to 150°C, and more preferably 100° to 140°C. Stripper and flash temperatures will, of course, depend on stripper pressure. Thus at 110 to 172 kPa (16 to 25 psia) stripper pressures, the temperature will preferably be about 100° to 140°C during desorption.

In the most preferred embodiment of the present invention, the acid gas, e.g., $CO_2$, is removed from a gaseous stream by means of a process which comprises, in sequential steps, (1) contacting the gaseous stream with a solution comprising from 20 to 40 weight percent, preferably from 25 to 35 weight percent of potassium carbonate, an activator or promoter system comprising from 20 ppm to 15 weight percent, preferably from 200 ppm to 15 weight percent, more preferably from 2 to 10 weight percent of the promoter, the balance of the solution being comprised of water and other ingredients, the contacting being conducted at conditions whereby the acid gas is absorbed in the solution, and preferably at a temperature ranging from 25° to 200°C, more preferably from 50° to 150°C and a pressure ranging from 689 to 10342 kPa (100 to 1500 psia), and (2) regenerating the solution at conditions whereby the acid gas is desorbed from the solution. By practicing the present invention, one can operate the above described process at conditions whereby the working capacity, which is the difference in moles of acid gas absorbed in the solution at the termination of steps (1) and (2), based on the moles of potassium carbonate originally present, is greater than obtained under the same operating conditions for removing acid gases from gaseous streams, wherein said same operating conditions include conventional promoters such as DEA. In other words, working capacity is defined as follows:

$CO_2$ in solution at completion of absorption **less** $CO_2$ in solution at completion of desorption

which is:

$$\frac{\text{Moles of } CO_2 \text{ Absorbed}}{\text{Initial Moles } K_2CO_3} \ \textbf{less} \ \frac{\text{Moles Residual } CO_2 \text{ Absorbed}}{\text{Initial Moles } K_2CO_3}$$

Besides increasing working capacity, the use of the present promoter leads to higher rates of absorption and desorption. Rate of absorption is defined as the amount of $CO_2$ absorbed in a fixed time period. The combined higher rate and capacity leads to a lower steam consumption during desorption.

Steam requirements are the major part of the energy cost of operating an acid gas, e.g., $CO_2$ absorption unit. Substantial reduction in energy, i.e., operating costs will be obtained by the use of the process utilizing the promoters of the present invention. Additional savings from new plant investment as well as reduction and debottlenecking of misting plants may also be obtained by the use of the present promoters. The removal of acid gases, such as $CO_2$, from gas mixtures is of major industrial importance, particularly in systems which utilize potassium carbonate activated by the present promoters.

Hydrolysis of the alkyl hydantoins used as a starting absorber material and deacribed by formula 1 above is found to readily occur under the scrubbing processing conditions described above, leading to the in-situ production of the amino acid salts described by formula 2 above. The in-situ hydrolysis reaction generates $CO_2$ gas and ammonia. The generated $CO_2$ is absorbed and removed by the stripping system. The generated ammonia is removed as part of the acid strip gas. Interpolation of the experiment described below would indicate that essentially complete hydrolysis of the hydantoin under continuous processing conditions occurs within a period of 5 days, probably within 2 days, at which time the system is in equilibrium and operates essentially as disclosed in U.S. Patents 4,759,866 and 4,919,904.

The hydantoin compounds of formula 1 above may also be employed to maintain, replenish or increase the level of promoter which is lost or diluted during operation of the continuous scrubbing process. Dilution occurs when excess water is introduced into the scrubbing system. Such loss occurs primarily as a consequence of mechanical entrainment of the promoter over a period of time, or through leaks in the process equipment such as valve and pump seals. Replenishment hydantoin is added as such or as a basic solution described above.

The hydantoin compounds may also be used in the process of admixture with or as a replenishment for other compounds which are known promoters in acid gas scrubbing process. Such promoters include alkanolamines such as diethanolamine; 1,6-hexanediamine; piperidine; and other well known hindered amines or amino acids such as disclosed in U.S. Patent 4,759,866. Replenishment may be carried out by continuously introducing small quantities of hydantoin or by periodic introduction of larger quantities of hydantoin into the scrubbing system, Replenishment of a scrubbing system already containing a promoter mixture of diethanolamie and a 2-aminoisobutyric acid is especially preferred.

When used to replenish the amino acid promoter or other promoters, the hydantoin is added generally in an amount sufficient to achieve the desired level of promoter which can be an amount of at least about 10 ppm, more preferably at least about 30 ppm, up to about 3 weight percent based on the weight of the solution in the scrubbing system. When used in admixture with other known promoters such as diethanolamine, it is generally used at levels of from 10-90% by weight, more preferably from 35-65% by weight, based on the weight of mixed promoters used.

By way of example only, in order to simulate "hot pot" process scrubbing, an aqueous basic alkali solution was provided containing potassium carbonate, potassium bicarbonate, diethanolamine and the other ingredients specified below to yield 800 ml of solution having a specific gravity of 1.292:

15.8 wt % K2CO3
14.2 wt % $KHCO_3$ (9.8% as $K_2CO_3$)
1.3 wt % Diethanolamine
2.2 wt % $H_3BO_3$
2200 ppm pentavalent vanadium ($V^{+5}$)
27.2 ppm Fe

Approximately 64 grams of 5,5-dimethylhydantoin (DMH) were then dissolved in the solution to provide a post hydrolysis equivalent of about 5% by weight of aminoisobutyric acid (or about 6.9% by weight of the potassium salt thereof).

This mixture was transferred to a 3-necked flask equipped with a heating mantle, thermometer and a condenser open to the atmosphere for condensing the water and venting of the non-condensed ammonia and $CO_2$ gases generated during the hydrolysis reaction.

The mixture was heated to boiling and boiled for a period of 94 hours during which time gases were continuously vented. To maintain water balance, the water which was removed by evaporation was made up by pumping fresh distilled water into the flask. Samples of the reaction product were withdrawn by syringe at periodic intervals and the content of 2-aminoisobutyric acid hydrolysis product (AIBA) was determined by NMR analysis. Results are shown in Table 1.

TABLE 1

| TIME (HR) | AIBA DETECTED | % CONVERSION |
|---|---|---|
| 1 | 0.08% | 1.6% |
| 3 | 0.55% | 10.6% |
| 6 | 1.51% | 29.3% |
| 24 | 3.45% | 71.9% |
| 94 | 5.00% | ~100% |

Thus essentially complete conversion of the hydantoin to AIBA occurs prior to 94 hours reaction time.

## Claims

1. A process for removing $CO_2$ and other acid gases from a normally gaseous mixture comprising:
   (i) contacting the normally gaseous mixture with an aqueous scrubbing solution comprising a mixture of:
      (a) one or a mixture of alkali or alkaline earth metal salts;

(b) a hydantoin compound having the formula

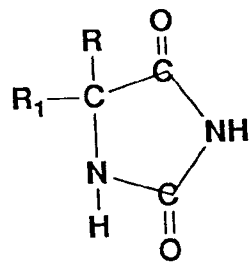

wherein R and $R_1$ may be the same or different and are selected from the group consisting of $C_1$ to Cry alkyl radicals;

(c) water;

(ii) subjecting said scrubbing solution to hydrolysis-absorption conditions to form a reaction mixture comprising the corresponding acid of said hydantoin compound; and

(iii) desorbing at least a portion of the absorbed $CO_2$ from said reaction mixture.

2. The process of claim 1 wherein component (a) is a potassium salt.

3. The process of claim 1 or claim 2 wherein component (b) is selected from 5,5-dimethylhydantoin, 5-ethyl-5-methylhydantoin, 5-methyl-5-propylhydantoin, 5,5-diethylhydantoin, 5-ethyl-5-propylhydantoin, 5,5-dipropylhydantoin, 5-isopropyl-5-methylhydantoin, 5-ethyl-5-isopropylhydantoin, 5-isopropyl-5-propylhydantoin, 5,5-diisopropyl hydantoin and mixtures thereof.

4. The process of any of claims 1 to 3, wherein said aqueous solution contains from 20 to 40% by weight of component (a) and from 20 ppm to 15% by weight of component (b).

5. The process of any of claims 1 to 4 wherein said aqueous solution contains a corrosion inhibitor.

6. The process of any of claims 1 to 5 wherein the contacting and hydrolysis-absorption steps are conducted at a temperature ranging from 25° to 200°C and at a pressure of from 34 to 13790 kPa (5 to 2000 psia) and the desorption step is conducted by heating the solution to a temperature ranging from 50° to 150°C and at a pressure of from 110 to 689 kPa (16 to 100 psia).

7. A process for replenishing an aqueous alkali scrubbing solution containing a gas adsorption promoter comprising adding to said solution a hydantoin compound having the formula:

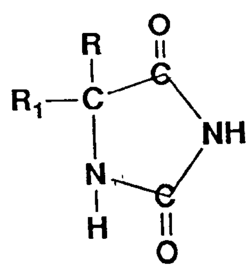

wherein R and $R_1$ may be the same or different and are selected from the group consisting of $C_1$ to $C_3$ alkyl radicals, and subjecting said mixture to hydrolysis conditions whereby said hydantoin compound is converted to a 2-aminoalkanoic acid or salt thereof.

8. The process of claim 7 wherein said hydantoin compound is 5,5-dimethylhydantoin.

9. The process of claim 7 or claim 8 wherein said gas absorption promoter is a 2-aminoalkanoic acid and/or diethanolamine.

10. The process of claim 9 wherein said hydantoin is added continuously to said solution to maintain a level

of at least about 10 ppm based on the weight of said solution.

**11.** The use of a hydantoin compound as defined in claim 1 to promote a basic aqueous scrubbing system.

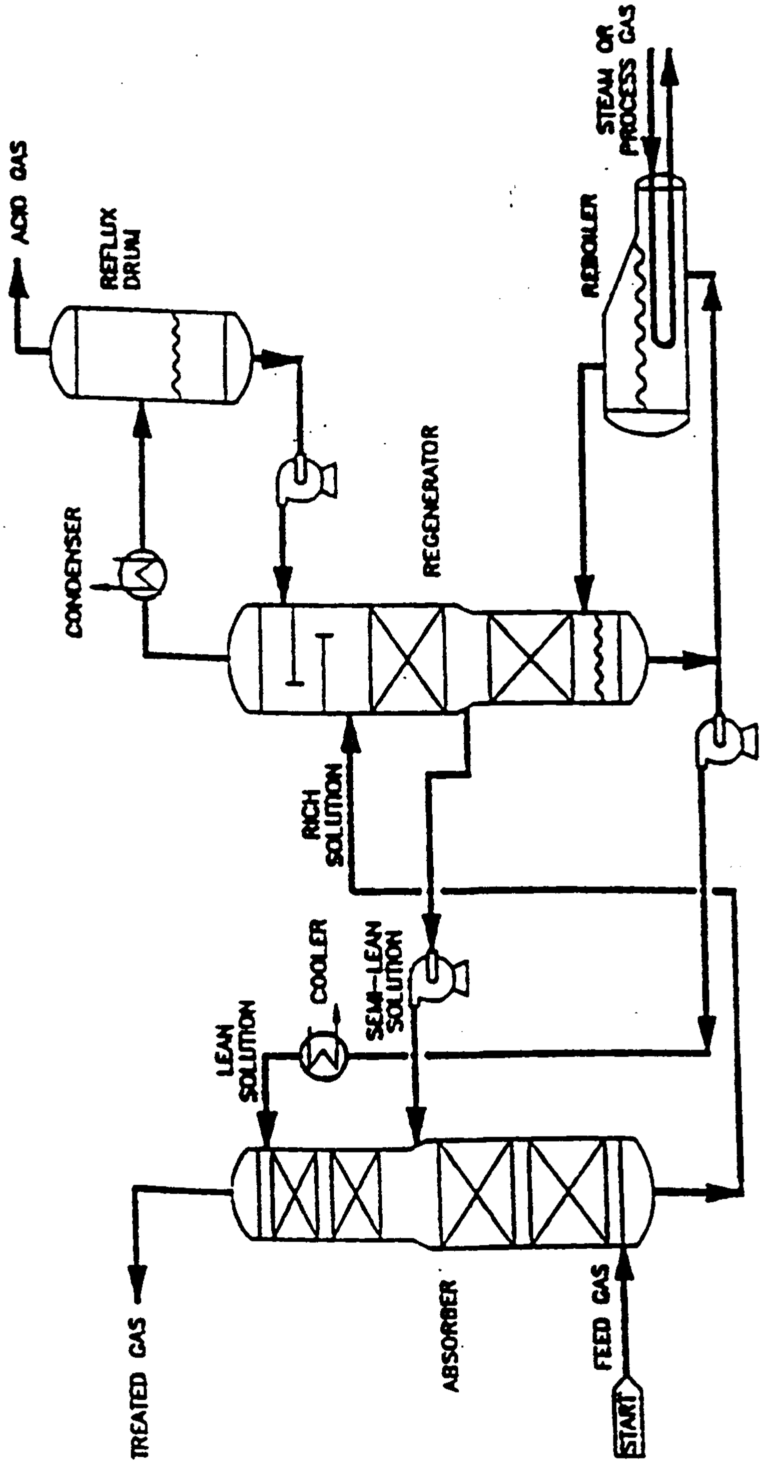
ACID GAS
REFLUX DRUM
STEAM OR PROCESS GAS
REBOILER
CONDENSER
REGENERATOR
RICH SOLUTION
LEAN SOLUTION
COOLER
SEMI-LEAN SOLUTION
TREATED GAS
ABSORBER
FEED GAS
START

FIGURE 1

European Patent Office

# EUROPEAN SEARCH REPORT

Application Number

EP 92 30 8745

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,Y | EP-A-0 471 591 (THE DOW CHEMICAL COMP.) 19 February 1992<br>* page 3, line 6 - line 15 *<br>* page 4, line 21 - line 22 *<br>* page 4, line 34 - line 37; claims 1-6,13-19 * | 1-11 | B01D53/14 |
| Y | EP-A-0 245 961 (EXXON RESEARCH AND ENG.)<br>* claims 1-10 * | 1-11 | |
| A | GB-A-1 305 718 (IMPERIAL CHEMICAL IND.)<br>* claims 1-21 * | 1-2,4,6,7,9,11 | |
| A | US-A-4 217 238 (SARTORI ET AL.)<br>* column 5, line 23 - column 6, line 29 *<br>* column 22, line 45 - column 28, line 4; claims 1-11 * | 1-11 | |

TECHNICAL FIELDS SEARCHED (Int. Cl.5 )

B01D

The present search report has been drawn up for all claims

| Place of search | Date of completion of the search | Examiner |
|---|---|---|
| THE HAGUE | 04 JANUARY 1993 | EIJKENBOOM T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)